# EUROPEAN PATENT SPECIFICATION

(11) **EP 0 403 612 B1**
(45) Date of publication and mention of the grant of the patent: **18.09.1996**
(21) Application number: 89912883.9
(22) Date of filing: 13.11.1989
(51) Int. Cl.: G03B 42/04, G03C 5/16, A61B 6/14

(54) **DENTAL FILM PACKET IMPROVEMENT**
VERBESSERUNG FÜR DENTALE FILMVERPACKUNG
SACHET DE FILM DENTAIRE AMELIORE

(30) Priority: 21.11.1988 US 273765
(43) Date of publication of application: 27.12.1990
(73) Proprietor: EASTMAN KODAK COMPANY, Rochester, New York 14650-2201 (US)
(72) Inventor: GAY, George, Carroll, Ontario, NY 14519 (US)
(74) Representative: Lewandowsky, Klaus, Dipl.-Ing.
(86) International application number: PCT/US89/04972
(87) International publication number: WO 90/05938

(56) References cited:
- EP-A- 0 173 277
- EP-A- 0 249 878
- DE-C- 2 640 715
- US-A- 3 714 881
- US-A- 4 108 308
- US-A- 4 626 216
- US-A- 4 791 657
- US-A- 4 805 201

## Description

### BACKGROUND OF THE INVENTION

### Field of the Invention

The present invention relates generally to intraoral dental radiographic film packets, and particularly to an improvement therein that renders them more comfortable for the patient.

### Description of the Prior Art

The prior art is replete with dental film packets of the type referred to above. Examples may be found in the following documents:
U.S. Patent No. 1,631,497 - Discloses a dental x-ray film package comprising superposed sensitized and protective sheets and a soft, pliable beading that embraces their edges to hold the sheets together and to render the package more comfortable in use; the beading may be of molded rubber or a stretched rubber band cemented in place.
U.S. Patent No. 3,443,093 - Discloses a dental x-ray film package comprising sensitized and protective sheets superposed within a readily openable sealed envelope of substantially uniform overall thickness.
U.S. Patent No. 4,626,216 - Discloses a resilient pad (made of foamed ethylene vinyl acetate) that is folded over, and adhered to, one edge and two corners of a dental x-ray film packet, to enhance comfort and to facilitate positioning in the patient's mouth.

While such film packages and associated pads may have sufficed for their respective purposes, there has remained a persistent need for a dental film packet improvement that would efficiently render the packet more comfortable when operatively positioned inside a patient's mouth. This need has long existed, especially for the particular type of film packet disclosed in the cited U.S. Patent No. 3,443,093. The squared-off edge defining the perimeter of that packet has been a continuing cause of discomfort for some patients whenever that edge has been pressed into sensitive tissues of the mouth.

A common approach to cushioning that edge has been to attach a soft pad around it, as disclosed, for example, in the cited U.S. Patent No. 4,626,216. One drawback to adding a cushioning pad has been the resulting increase in overall film package size, which may make it difficult to position the package correctly in the patient's mouth, and may cause stacking and gating problems when loaded into commonly used film packet dispensing devices. Another drawback of the typical cushioning pad has been that the open-cell, or foamed, material used therein to enhance its cushioning effect absorbs patient saliva, which may be contaminated with contagious viruses.

Although dental x-ray film packets of the type disclosed in U.S. Patent No. 3,443,093 have been widely used for more than twenty years, the long-recognized need to ameliorate discomfort felt by some patients, in a practical and efficient manner, without adversely increasing the packet's in-use size, and without employing highly porous, saliva-absorbing materials, remains unresolved.

### SUMMARY OF THE INVENTION

A primary object of this invention has been to meet the foregoing need for such a comfort-enhancing film packet improvement. Another object has been to do so in a totally reliable, yet practical and economical, manner. Those and other objects have been achieved by the invention herein disclosed and claimed.

This invention finds utility as a comfort-enhancing improvement upon a known intraoral dental radiographic film packet as defined in claim 1. The deflectable lateral extension of the claimed intraoral dental radiographic packet renders the edge portion part of the packet sufficiently flexible to be readily deflected when the packet is operatively positioned inside a patient's mouth, thereby cushioning the impact of the envelope perimetric edge of the packet on the oral tissues.

This invention, and its objects and advantages, will become more apparent in the detailed description of the preferred embodiment presented hereinbelow.

### BRIEF DESCRIPTION OF THE DRAWINGS

In the detailed description of the preferred embodiment of this invention presented below, reference is made to the accompanying drawings, wherein like reference characters denote like elements, and wherein:
Fig. 1 is a top-plan view of an intraoral dental radiographic film packet as known in the prior art, and to which the film packet improvement of this invention is directed;
Fig. 2 is a cross-sectional elevation of the known packet depicted in Fig. 1, taken along line 2-2 therein and showing principal components thereof exaggerated in thickness for clarity of illustration;
Fig. 3 is a top-plan view similar to Fig. 1 but illustrating the film packet therein as improved by the preferred embodiment of this invention, and as disposed in its normally flat condition;
Fig. 4 is a cross-sectional elevation of the improved packet of Fig. 3, taken along line 4-4 therein and showing its principal components exaggerated in thickness for clarity; and
Fig. 5 is a side elevation of the improved packet shown in Figs. 3 and 4, illustrating the pliant marginal flap portions thereof as they might be folded back upon its main body portion.

### DESCRIPTION OF THE PREFERRED EMBODIMENT

Because certain parts of intraoral dental radiographic film packets are well known, the following description is directed in particular to those elements forming, cooperating directly with, or relating to, this invention. Elements not specifically shown or described herein are selectable from those known in the relevant art.

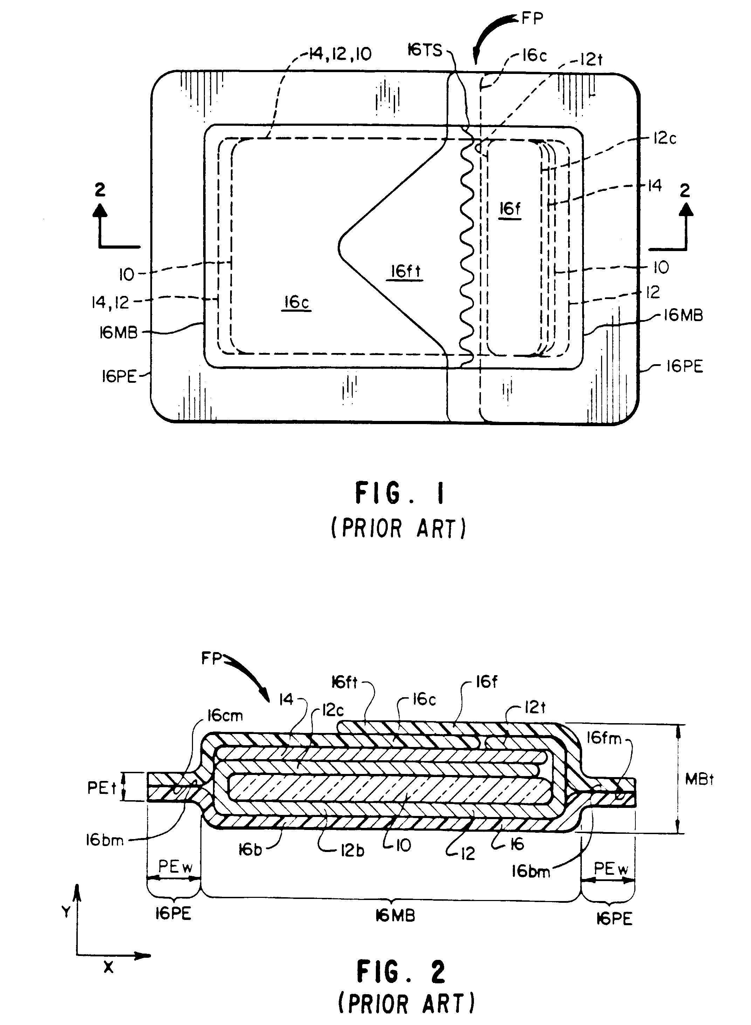

Figs. 1 and 2 illustrate an intraoral dental radiographic film packet of a type known in the prior art, e.g., as disclosed in the aforementioned US-A-3,443,093, and to which the film packet improvement of this invention is directed. The known packet, designated generally by the letters FP, comprises a sheet of x-ray film 10 having a sensitive emulsion on one or both sides (as is well known in the art); a folded black paper wrapper 12; a sheet of metal foil 14 substantially the same shape and size as the film sheet 10; and an enclosing envelope 16, preferably plastic, within which the foregoing components are arranged as shown and sealed. As is well known, the envelope 16 may be made of a duplex plastic sheet, i.e., a sheet of white plastic on the outside laminated to a sheet of black plastic on the inside. The plastic preferred for the envelope is polyvinylchloride, although polyethylene, Pliofilm, Cryovac (a trademark of Grace GmbH, Noderstedt), or other plastic films or combinations of plastics might also be used. The white outside surface of the envelope may be matte, glossy, or embossed. The metal foil sheet 14 preferably is made of lead, but any metal that absorbs X-rays satisfactorily for dental radiographic purposes may be employed.

In the assembled film packet, as shown in Fig. 2, the paper wrapper 12 comprises a base section 12b underlying film sheet 10, a folded-over cover section 12c overlying film sheet 10, and a folded-over tab section 12t overlying the right-hand end portions of film sheet 10 and cover section 12c. It will be seen that metal foil sheet 14 lies between cover section 12c and tab section 12t. The plastic envelope 16 comprises a bottom wall 16b underlying the paper wrapper base section 12b, a cover section 16c overlying the metal foil sheet 14, and a flap section 16f overlying both the paper wrapper tab section 12t and the envelope cover section 16c. Cover section 16c and flap section 16f together form the top wall of the envelope. As shown in Fig. 1, the left-hand end portion of envelope flap section 16f is triangular in shape, to form a tab end 16ft of the flap section. Flap section 16f is tack-sealed to cover section 16c, transversely of the envelope as indicated by the undulated line 16TS. The envelope bottom wall 16b includes an upward-facing marginal area 16bm which is sealed to an opposing downward-facing marginal area 16cm of cover section 16c and an opposing downward-facing marginal area 16fm of flap section 16f. The seal may be provided in any suitable manner, e.g., by heat, ultrasonics, or an adhesive. To open the packet for processing film sheet 10 after its exposure, the technician first grasps the unsealed tab end 16ft of flap section 16f and then pulls the flap section upwardly, so as to break the transverse seal 16TS and rip open the seal between marginal areas 16fm and 16bm. With the envelope thus opened, the technician then grasps paper wrapper tab section 12t and pulls paper wrapper 12 out of the envelope with film sheet 10 riding between wrapper base and cover sections 12b and 12c.

With the envelope bottom wall 16b joined to the top wall cover and flap sections 16c and 16f along their opposing marginal areas as described, the envelope may be viewed as comprising a main body portion 16MB surrounded by a perimetric edge portion 16PE, as shown most clearly in Fig. 2. It will be seen that the squared-off peripheral edge of perimetric edge portion 16PE includes relatively sharp top and bottom corners, which have caused discomfort when pressed against sensitive oral tissues in some patients. The present invention provides an efficient and reliable means for ameliorating such discomfort.

As a comfort-enhancing improvement upon a film packet of the type thus far described, this invention comprises a deflectable lateral extension of at least part of the envelope perimetric edge portion 16PE, the extension projecting outwardly therefrom by an amount rendering that part of the edge portion and the extension sufficiently flexible to be readily deflected when operatively positioned inside a patient's mouth, thereby cushioning the impact of the relatively sharply cornered envelope edge.

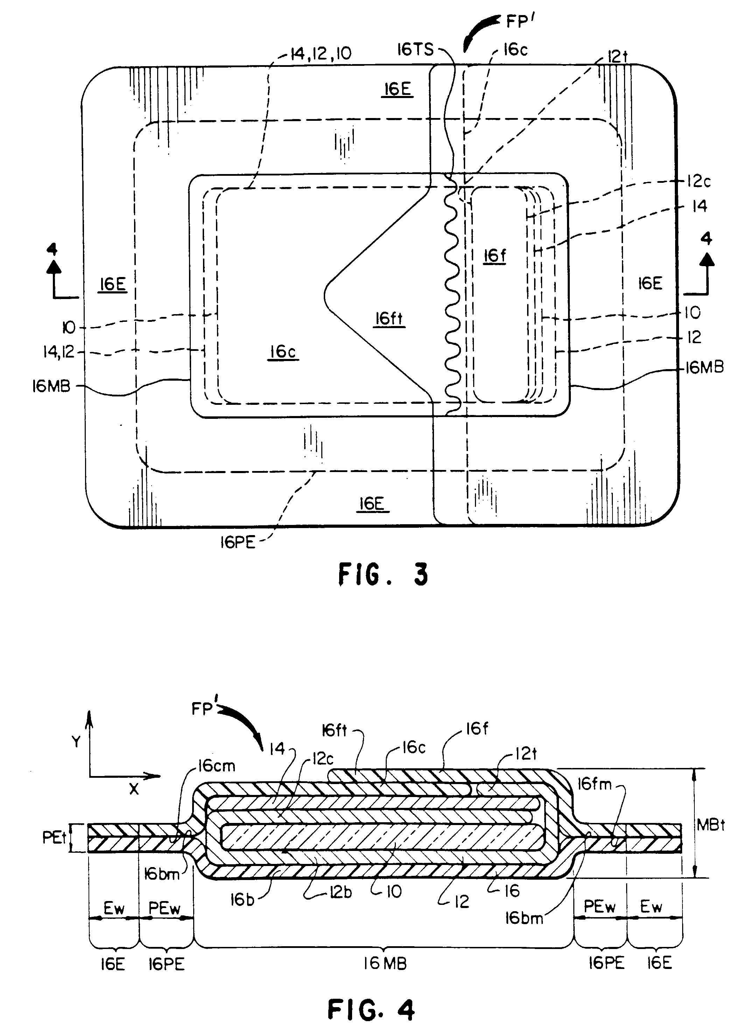

In accordance with the preferred embodiment, and as shown most clearly in Fig. 3, the extension 16E is continuous around all of, and thus surrounds, the perimetric edge portion 16PE. It should be understood, however, that this invention also contemplates alternative embodiments (not shown) wherein the extension may be discontinuous along, or project from only part(s) of, the perimetric edge portion. For example, such an extension could be provided only around the envelope corners and/or along one or more of the envelope sides and ends.

As viewed in Figs. 2 and 4, the perimetric edge portion 16PE, from which extension 16E projects, has an edge portion thickness PEt, measured in a first direction Y perpendicular to the envelope bottom and top walls, and an edge portion width PEw, measured in a second direction X parallel with the envelope walls. Also as viewed in Figs. 2 and 4, the envelope main body portion 16MB has an overall thickness MBt, measured in first direction Y; and as seen in Fig. 4, the extension 16E projects laterally outward beyond the perimetric edge portion 16PE by an amount Ew measured in second direction X.

The extension amount, or width, Ew may be defined variously in terms of the perimetric edge portion thickness PEt, the main body portion overall thickness MBt, or/and the perimetric edge portion width PEw. Generally speaking, it has been found that the amount Ew should be approximately 20 times the edge portion thickness PEt. It also has been noted that Ew should be at least 2 times, but not more than 4 times, and preferably about 3 times, the body portion overall thickness MBt. It also has been observed that the width Ew should be at least 3 times, but not more than 7 times, and preferably between 4 and 6 times, the edge portion width PEw. Depending upon dimensional and material variations that might occur among differing film packets of this type, the foregoing relationships advantageously may be combined by defining the extension amount, or width, Ew as being approximately 20 times the edge portion thickness PEt, but no less than the greater of 3 times the edge portion width PEw and 2 times the overall thickness MBt, and no more than the lesser of 7 times the edge portion width PEw and 4 times the overall thickness MBt.

In a number of film packet samples analyzed, the envelope main body portion overall thickness MBt, as measured in first direction Y. ranged from about 1,422 mm (0.056 inches) to about 1.549 mm (0.061 inches), with a mean of about 1.483 mm (0.058 inches); the envelope perimetric edge portion thickness PEt, as measured in first direction Y, ranged from about 0.157 mm (0.006 inches) to about 0.310 mm (0.012 inches), with a mean of about 0.246 mm (0.010 inches); and the envelope perimetric edge portion width PEw, as measured in second direction X, averaged about 0.889 mm (0.035 inches). Preferably, for packets having such dimensions, the envelope extension width Ew, as measured in second direction X, should range only from about 3.556 mm (0.140 inches) to about 5.334 mm (0.210 inches).

To facilitate understanding of this invention as an improvement upon a known dental film packet, Fig. 4 illustrates the envelope extension 16E as though it might comprise an additional part abutting the envelope perimetric edge portion 16PE. Although conceivably the extension could be a separate piece joined to the edge portion, in the preferred embodiment as successfully produced and tested, the extension is conveniently formed as an integral lateral continuation of the edge portion itself. That is, the envelope bottom and top walls 16b and 16c, 16f are simply made larger than before, to provide the desired extension width Ew, and their thus-enlarged upward-and downward-facing marginal areas are sealed together as before. Accordingly, Fig. 3 indicates only by phantom outline the periphery of the initial, unextended perimetric edge portion 16PE.

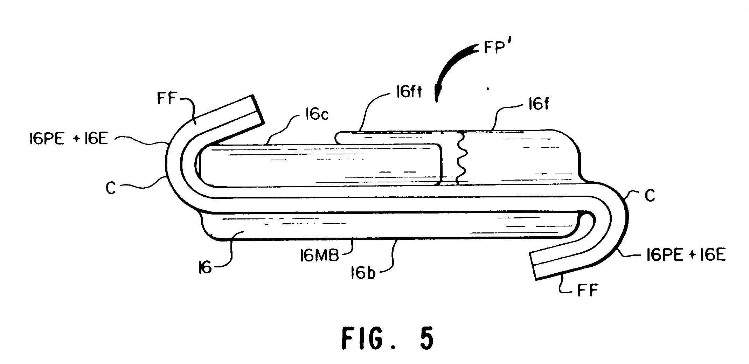

Fig. 5 illustrates the improved film packet FP' with its integrally extended perimetric edge portion appearing as a pair of oppositely projecting flexible flaps FF that have been deflected from their initial plane (shown in Fig. 4) and folded back upon the envelope main body portion 16MB. Although, for purposes of illustration, Fig. 5 shows the improved packet FP' with its left flap folded over and its right flap folded under the main body portion, it should be understood that either one or both of the flaps FF might be folded either way when the packet is appropriately positioned inside a patient's mouth. The curved portion C where each flap FF is folded, either way, around a body portion end provides an inherently resilient cushion to enhance patient comfort when that end of the packet is pressed against sensitive oral tissues. While not shown in Fig. 5, the same condition prevails when the enlarged lateral margins (top and bottom as viewed in Fig. 3) of the extended perimetric edge portion are similarly deflected and folded (again, either way) around the body portion sides, thereby providing the same cushioning effect regardless of the packet's orientation when operatively positioned inside the mouth. It should be noted that, during use, when the flexible flaps formed by extending the perimetric edge portion in accordance with this invention are deflected and folded back around the body portion ends or sides, toward the body portion top or bottom, to assume their cushioning configuration (such as that illustrated in Fig. 5), the overall length or width of the packet is not increased to an extent that would interfere with optimum positioning of the packet for the desired radiographic exposure.

It has been found that such an extension of the known packet's perimetric edge portion has proven effective in cushioning sensitive oral tissues from any discomfort that might otherwise be felt by some patients. The film packet improvement of this invention has thus successfully fulfilled the aforementioned widespread, long-recognized, but hitherto-unresolved need for a more comfortable intraoral dental radiographic film packet, and has done so without adversely increasing the packet's in-use size or resorting to a highly porous, saliva-absorbing material.

The present invention has now been described in detail with particular reference to its preferred embodiment illustrated herein. It will be understood, however, that variations and modifications can be effected within the scope of this invention.

## Claims

1. Intraoral dental radiographic film packet (FP) having a sensitized film sheet (10) and protective opaque sheets (12, 14) facing the sensitized film sheet enclosed by a light-tight envelope (16) that includes an opposed pair of generally parallel walls (16b and 16c, 16f) covering the sheets (10 and 12, 14), said walls (16b and 16c, 16f) being joined together along facing marginal areas thereof (16bm and 16cm, 16fm) surrounding the sheets (10 and 12, 14), thereby defining an envelope main body portion (16MB) comprising said walls and a perimetric edge portion (16PE) surrounding the envelope main body portion (16MB) of the envelope (16), a part of said perimetric edge portion (16PE) having a deflectable lateral extension (16E), said extension (16E) projecting outwardly from the perimetric edge portion by an amount (Ew) rendering said part of said perimetric edge portion (16PE) and said extension (16E) sufficiently flexible to be readily deflected, said extension and said perimetric edge portion being made of a pliant material defining a marginal flap portion (FF) of the envelope (16), said flap portion (FF) being sufficiently pliant to be readily deflected and folded back around part of said main body portion (16MB) toward one of said walls (16b and 16c, 16f), thereby forming a curved resilient cushion where so folded (C), when the packet (FP) is operatively positioned for effecting an intraoral radiographic exposure, wherein said main body portion (16MB) of the envelope (16) has an overall thickness (MBt) as measured perpendicular to said walls (16b and 16c, 16f), characterized in that said amount (Ew) by which said extension (16E) projects outwardly from said part of said perimetric edge portion (16PE) is at least twice said overall thickness (MBt), and said perimetric edge portion is integrally formed with said lateral extension.

2. Film packet as claimed in Claim 1 wherein said amount (Ew) is no greater than four times said overall thickness (MBt).

3. Film packet as claimed in Claim 2 wherein said amount (Ew) is approximately three times said overall thickness (MBt).

4. Film packet as claimed in Claim 1 wherein said perimetric edge portion (16PE) of the envelope (16) has an edge portion thickness (PEt) as measured perpendicular to said walls (16b and 16c, 16f), and wherein said amount (Ew) by which said extension (16E) projects outwardly from said at least part of said perimetric edge portion (16PE) is approximately twenty times said edge portion thickness (PEt).

5. Film packet as claimed in Claim 1 wherein said perimetric edge portion (16PE) of the envelope (16) has an edge portion width (PEw) as measured parallel with said walls (16b and 16c, 16f), and wherein said amount (Ew) by which said extension (16E) projects outwardly from said at least part of said perimetric edge portion (16PE) is at least three times said edge portion width (PEw).

6. Film packet as claimed in claim 5 wherein said amount (Ew) is no greater than seven times said edge portion width (PEw).

7. Film packet as claimed in Claim 6 wherein said amount (Ew) is between four and six times said edge portion width (PEw).

8. Film packet as claimed in Claim 1 wherein said main body portion (16MB) of the envelope (16) has an overall thickness dimension (MBt) as measured in a first direction (Y) perpendicular to said walls (16b and 16c, 16f), wherein said perimetric edge portion (16PE) of the envelope (16) has an edge portion thickness dimension (PEt) as measured in said first direction (Y) and an edge portion width dimension (PEw) as measured in a second direction (X) parallel with said walls (16b and 16c, 16f), wherein said extension (16E) projects outwardly from said at least part of said perimetric edge portion (16PE) in said second direction (X), and wherein said amount (Ew) by which said extension (16E) so projects is approximately twenty times said edge portion thickness dimension (PEt) but no less than the greater of three times said edge portion width dimension (PEw) and twice said overall thickness dimension (MBt).

9. Film packet as claimed in Claim 8 wherein said amount (Ew) is no greater than the lesser of seven times said edge portion width dimension (PEw) and four times said overall thickness dimension (MBt).

10. Film packet as claimed in Claim 1 wherein said main body portion (16MB) of the envelope (16) has an overall thickness (MBt) ranging from about 1.422 mm (0.056 inches) to about 1.549 mm (0.061 inches), wherein said perimetric edge portion (16PE) of the envelope (16) has an edge portion thickness (PEt) ranging from about 0.157 mm (0.006 inches) to about 0.310 mm (0.012 inches) and an edge portion width (PEw) of approximately 0.889 mm (0.035 inches), and wherein said amount (Ew) by which said extension (16E) projects outwardly from said at least part of said perimetric edge portion (16PE) ranges from about 3.556 mm (0.140 inches) to about 5.334 mm (0.210 inches).

## Patentansprüche

1. Röntgenfilmpackung (FP) für intraorale, dentale Zwecke, mit einem lichtempfindlichen Blattfilm (10) und diesem zugewandten lichtundurchlässigen Schutzfolien, wobei der Blattfilm und die Schutzfolien von einer lichtdichten Umhüllung (16) umschlossen sind, die zwei einander gegenüberliegende, im allgemeinen parallele Wandungen (16b und 16c, 16f) aufweisen, die den Blattfilm und die Schutzfolien bedecken und entlang sich gegenüberliegender, den Blattfilm und die Schutzfolien umgebender Randbereiche (16bm und 16cm, 16fm) aneinandergefügt sind und dadurch einen die Wandungen umfassenden Hauptkörper (16MB) der Umhüllung (16) sowie einen diesen umgebenden perimetrischen Randbereich (16PE) bilden, wobei ein Teil dieses Randbereichs eine umbiegbare seitliche Verlängerung (16E) umfaßt, die sich vom perimetrischen Randbereich um einen Betrag (Ew) nach außen erstreckt, der diesen Teil des Randbereichs (16PE) und die Verlängerung (16E) so flexibel macht, daß sie leicht umbiegbar sind, wobei die Verlängerung und der perimetrische Randbereich aus einem eine Randlasche (FF) der Umhüllung (16) bildenden biegsamen Material bestehen und die Lasche so biegsam ist, daß sie leicht umbiegbar und nach hinten um einen Teil des Hauptkörpers (16MB) herum in Richtung auf eine der Wandungen (16b und 16c, 16f) biegbar ist und dabei in der Biegung (C) ein gekrümmtes, nachgiebiges Kissen bildet, wenn die Röntgenfilmpackung (FP) derart positioniert ist, daß eine intraorale Röntgenbelichtung stattfindet, und wobei der Hauptkörper (16MB) der Umhüllung (16) senkrecht zu den Wandungen (16b und 16c, 16f) gemessen eine Gesamtdicke (MBt) hat, **dadurch gekennzeichnet, daß** der Betrag (Ew), um den die Verlängerung (16E) sich vom Teil des perimetrischen Randbereichs (16PE) aus nach außen erstreckt, mindestens dem Zweifachen der Gesamtdicke (MBt) entspricht und daß der perimetrische Randbereich einstückig mit der seitlichen Verlängerung ausgebildet ist.

2. Röntgenfilmpackung nach Anspruch 1, dadurch gekennzeichnet, daß der Betrag (Ew) höchstens dem Vierfachen der Gesamtdicke (MBt) entspricht.

3. Röntgenfilmpackung nach Anspruch 2, dadurch gekennzeichnet, daß der Betrag (Ew) etwa dem Dreifachen der Gesamtdicke (MBt) entspricht.

4. Röntgenfilmpackung nach Anspruch 1, dadurch gekennzeichnet, daß der perimetrische Randbereich (16PE) der Umhüllung (16) eine senkrecht zu den Wandungen (16b und 16c, 16f) gemessene Dicke (PEt) hat und der Betrag (Ew), um den die Verlängerung (16E) sich von mindestens dem Teil des perimetrischen Randbereichs (16PE) aus nach außen erstreckt, etwa dem Zwanzigfachen der Dicke (PEt) des Randbereichs entspricht.

5. Röntgenfilmpackung nach Anspruch 1, dadurch gekennzeichnet, daß der perimetrische Randbereich (16PE) der Umhüllung (16) eine parallel zu den Wandungen (16b und 16c, 16f) gemessene Breite (PEt) hat und daß der Betrag (Ew), um den die Verlängerung (16E) sich von mindestens dem Teil des perimetrischen Randbereichs (16PE) aus nach außen erstreckt, mindestens dem Zweifachen der Breite (PEw) des Randbereichs entspricht.

6. Röntgenfilmpackung nach Anspruch 5, dadurch gekennzeichnet, daß der Betrag (Ew) höchstens dem Siebenfachen der Breite (PEw) des Randbereichs entspricht.

7. Röntgenfilmpackung nach Anspruch 6, dadurch gekennzeichnet, daß der Betrag (Ew) dem Vier- bis Sechsfachen der Breite (PEw) des Randbereichs entspricht.

8. Röntgenfilmpackung nach Anspruch 1, dadurch gekennzeichnet, daß der Hauptkörper (16MB) der Umhüllung (16) eine in einer ersten Richtung (Y) senkrecht zu den Wandungen (16b und 16c, 16f) gemessene Gesamtdicke (MBt) hat, daß der perimetrische Randbereich (16PE) der Umhüllung (16) eine in der ersten Richtung (Y) gemessene Dicke (PEt) und eine in einer zweiten Richtung (X) parallel zu den Wandungen (16b und 16c, 16f) gemessene Breite (PEw) hat, daß sich die Verlängerung (16E) vom mindestens einen Teil des perimetrischen Randbereichs (16PE) aus in die zweite Richtung (X) nach außen erstreckt und daß der Betrag (Ew), um den sich die Verlängerung (16E) erstreckt, etwa dem Zwanzigfachen der Dicke (PEt) des Randbereichs, jedoch nicht weniger als dem höheren Wert des Dreifachen der Breite (PEw) des Randbereichs und dem Zweifachen der Gesamtdicke (MBt) des Hauptkörpers entspricht.

9. Röntgenfilmpackung nach Anspruch 8, dadurch gekennzeichnet, daß der Betrag (Ew) höchstens dem niedrigeren Wert des Siebenfachen der Breite (PEw) des Randbereichs und des Vierfachen der Gesamtdicke (MBt) des Hauptkörpers entspricht.

10. Röntgenfilmpackung nach Anspruch 1, dadurch gekennzeichnet, daß der Hauptkörper (16MB) der Umhüllung (16) eine Gesamtdicke (MBt) von etwa 1,422 mm (0,056 Zoll) bis etwa 1,549 mm (0,061 Zoll) hat, daß der perimetrische Randbereich (16PE) der Umhüllung (16) eine Dicke (PEt) von etwa 0,157 mm (0,006 Zoll) bis etwa 0,310 mm (0,012 Zoll) und eine Breite (PEw) von etwa 0,889 mm (0,035 Zoll) hat und daß der Betrag (Ew), um den die Verlängerung (16E) sich von mindestens dem Teil des perimetrischen Randbereichs (16PE) aus nach außen erstreckt, etwa zwischen 3,556 mm (0,14 Zoll) und etwa 5,334 mm (0,21 Zoll) liegt.

## Revendications

1. Sachet de film (FP) pour radiographie dentaire intrabuccale comportant une feuille de film sensible (10) et des feuilles opaques protectrices (12, 14) faisant face à la feuille de film sensible, renfermées par une enveloppe étanche à la lumière (16) qui comprend une paire de parois généralement parallèles opposées (16b et 16c, 16f) recouvrant les feuilles (10 et 12, 14), lesdites parois (16b et 16c, 16f) étant réunies le long de zones marginales de celles-ci se faisant face (16bm et 16cm, 16fm) entourant les feuilles (10 et 12, 14), en définissant ainsi une partie de corps principal (16MB) de l'enveloppe comprenant lesdites parois et une partie de bord périphérique (16PE) entourant la partie de corps principal (16MB) de l'enveloppe (16), une partie de ladite partie de bord périphérique (16PE) comportant un prolongement latéral (16E) déformable, ledit prolongement (16E) faisant saillie vers l'extérieur à partir de la partie de bord périphérique d'une quantité (Ew) rendant ladite partie de ladite partie de bord périphérique (16PE) et ledit prolongement (16E) suffisamment flexibles pour être facilement déformés, ledit prolongement et ladite partie de bord périphérique étant faits d'un matériau souple définissant une partie de rabat marginal (FF) de l'enveloppe (16), ladite partie de rabat (FF) étant suffisamment souple pour être facilement déformée et repliée autour d'une partie de ladite partie de corps principal (16MB) en direction de l'une desdites parois (16b et 16c, 16f), en formant ainsi un coussin élastique incurvé là où elle est pliée (C) de cette manière, lorsque le sachet (FP) est positionné de façon fonctionnelle pour pratiquer une radiographie intrabuccale, dans lequel ladite partie de corps principal (16MB) de l'enveloppe (16) présente une épaisseur totale (MBt) mesurée perpendiculairement auxdites parois (16b et 16c, 16f), caractérisé en ce que ladite quantité (Ew) de laquelle ledit prolongement (16E) fait saillie vers l'extérieur à partir de ladite partie de ladite partie de bord périphérique (16PE) est égale au moins au double de ladite épaisseur totale (MBt), et ladite partie de bord périphérique est formée en une seule pièce avec ledit prolongement latéral.

2. Sachet de film selon la revendication 1, dans lequel ladite quantité (Ew) n'est pas supérieure à quatre fois ladite épaisseur totale (MBt).

3. Sachet de film selon la revendication 2, dans lequel ladite quantité (Ew) est égale approximativement au triple de ladite épaisseur totale (MBt).

4. Sachet de film selon la revendication 1, dans lequel ladite partie de bord périphérique (16PE) de l'enveloppe (16) présente une épaisseur de partie de bord (PEt) mesurée perpendiculairement auxdites parois (16b et 16c, 16f), et dans lequel ladite quantité (Ew) de laquelle ledit prolongement (16E) fait saillie vers l'extérieur à partir de ladite au moins une partie de ladite partie de bord périphérique (16PE) est égale à approximativement vingt fois ladite épaisseur de partie de bord (PEt).

5. Sachet de film selon la revendication 1, dans lequel ladite partie de bord périphérique (16PE) de l'enveloppe (16) présente une largeur de partie de bord (PEw) mesurée parallèlement auxdites parois (16b et 16c, 16f), et dans lequel ladite quantité (Ew) de laquelle ledit prolongement (16E) fait saillie vers l'extérieur à partir de ladite au moins une partie de ladite partie de bord périphérique (16PE) est égale à au moins trois fois ladite largeur de partie de bord (PEw).

6. Sachet de film selon la revendication 5, dans lequel ladite quantité (Ew) n'est pas supérieure à sept fois ladite largeur de partie de bord (PEw).

7. Sachet de film selon la revendication 6, dans lequel ladite quantité (Ew) est égale à de quatre à six fois l'épaisseur de ladite partie de bord (PEw).

8. Sachet de film selon la revendication 1, dans lequel ladite partie de corps principal (16MB) de l'enveloppe (16) présente une dimension d'épaisseur totale (MBt) mesurée dans une première direction (Y) perpendiculaire auxdites parois (16b et 16c, 16f), dans lequel ladite partie de bord périphérique (16PE) de l'enveloppe (16) présente une dimension d'épaisseur de partie de bord (PEt) mesurée dans ladite première direction (Y) et une dimension de largeur de partie de bord (PEw) mesurée dans une seconde direction (X) parallèle auxdites parois (16b et 16c, 16f), dans lequel ledit prolongement (16E) fait saillie vers l'extérieur à partir de ladite au moins une partie de ladite partie de bord périphérique (16PE) dans ladite seconde direction (X), et dans lequel ladite quantité (Ew) de laquelle ledit prolongement (16E) fait ainsi saillie est approximativement égale à vingt fois ladite dimension d'épaisseur de partie de bord (PEt) mais n'est pas inférieure à la plus grande des valeurs entre le triple de ladite dimension de largeur de partie de bord (PEw) et le double de ladite dimension d'épaisseur totale (MBt).

9. Sachet de film selon la revendication 8, dans lequel ladite quantité (Ew) n'est pas supérieure à la plus faible des valeurs entre sept fois ladite dimension de largeur de partie de bord (PEw) et quatre fois ladite dimension d'épaisseur totale (MBt).

10. Sachet de film selon la revendication 1, dans lequel ladite partie de corps principal (16MB) de l'enveloppe (16) présente une épaisseur totale (MBt) comprise entre environ 1,422 mm (0,056 pouce) et environ 1,549 mm (0,061 pouce), dans lequel ladite partie de bord périphérique (16PE) de l'enveloppe (16) présente une épaisseur de partie de bord (PEt) comprise entre environ 0,157 mm (0,006 pouce) et environ 0,310 mm (0,012 pouce) et une largeur de partie de bord (PEw) d'approximativement 0,889 mm (0,035 pouce), et dans lequel ladite quantité (Ew) de laquelle ledit prolongement (16E) fait saillie vers l'extérieur à partir de ladite au moins une partie de ladite partie de bord périphérique (16PE) est comprise entre environ 3,556 mm (0,140 pouce) et environ 5,334 mm (0,210 pouce).
